**Europäisches Patentamt**

**European Patent Office**

**Office européen des brevets**

(19)

(11) Numéro de publication : **0 340 118 B1**

## (12) FASCICULE DE BREVET EUROPEEN

(45) Date de publication du fascicule du brevet :
**16.12.92 Bulletin 92/51**

(51) Int. Cl.$^5$ : **B60N 2/02, A47C 16/00**

(21) Numéro de dépôt : **89420061.7**

(22) Date de dépôt : **21.02.89**

(54) **Articulation continue irreversible.**

(30) Priorité : **23.02.88 FR 8802141**

(43) Date de publication de la demande :
**02.11.89 Bulletin 89/44**

(45) Mention de la délivrance du brevet :
**16.12.92 Bulletin 92/51**

(84) Etats contractants désignés :
**AT BE CH DE ES FR GB GR IT LI LU NL SE**

(56) Documents cités :
**DE-B- 1 680 242
FR-A- 1 590 551
FR-A- 2 467 729
FR-A- 2 607 761
GB-A- 2 073 311**

(73) Titulaire : **CESA COMPAGNIE EUROPEENNE
DE SIEGES POUR AUTOMOBILES
20, rue Paul-Vaillant-Couturier
F-92300 Levallois-Perret (FR)**

(72) Inventeur : **Blanchard, Jean-Marie
2, rue Pasteur
F-45290 Nogent/Vernisson (FR)**

(74) Mandataire : **Polus, Camille et al
c/o Cabinet Lavoix 2, Place d'Estienne d'Orves
F-75441 Paris Cedex 09 (FR)**

**EP 0 340 118 B1**

Jouve, 18, rue Saint-Denis, 75001 PARIS

## Description

L'invention concerne les articulations utilisées principalement pour le réglage de l'inclinaison du dossier d'un siège par rapport à l'assise. Elle s'applique en particulier aux sièges de véhicules tels que, par exemple, ceux qui équipent les véhicules automobiles.

On connaît différents types d'articulations à réglage continu et en particulier celles décrites dans le brevet FR-A-1 590 551. Ce document décrit trois modes particuliers de réalisation d'articulations continues comportant un satellite qui coopère par engrènement avec deux roues planétaires. L'une de ces roues planétaire est solidaire du dossier du siège par l'intermédiaire d'une ferrure appropriée et l'autre solidaire de l'assise au moyen également d'une autre ferrure. Un organe de commande entraîne le satellite par l'intermédiaire d'un arbre qui fait tourner un excentrique et le satellite fait tourner la roue planétaire mobile, solidaire du dossier, par rapport à la roue planétaire fixe, solidaire de l'assise. On règle ainsi l'inclinaison du dossier.

Il est précisé dans ce document que grâce à l'utilisation d'un train épicycloïdal l'articulation continue décrite est irréversible c'est-à-dire qu'on ne peut pas entraîner en rotation l'une des roues planétaires par rapport à l'autre sans agir sur l'organe de commande qui actionne l'excentrique. Ceci veut dire que si on essaye de faire tourner la roue planétaire mobile en agissant par exemple sur le dossier il y a blocage automatique de l'articulation.

On a constaté que deux modes de réalisation décrits dans ce document sont effectivement irréversibles. Les articulations correspondant à ces deux modes ont pour caractéristique commune que le satellite comporte une seule denture dont les dents ont une longueur suffisante pour engrener à la fois sur les deux dentures des roues planétaires qui se trouvent côte à côte dans la zone d'engrènement. Ainsi un couple exercé sur la roue planétaire mobile, par exemple par une poussée effectuée sur le dossier, crée sur la denture unique du satellite un couple moteur auquel s'oppose un couple résistant égal et opposé créé sur la même denture du satellite par la roue planétaire fixe.

L'expérience a cependant montré que ces deux modes de réalisation d'articulations comportant un satellite à denture unique ont des inconvénients. En effet selon le premier mode on met en oeuvre deux roues planétaires montées sur un axe commun ayant des dentures de même diamètre mais de nombres de dents différents qui engrènent sur la denture unique ce qui est une cause de jeu et d'usure. Selon la deuxième mode de réalisation les diamètres de denture des roues planétaires sont différents mais l'une des deux est entraînée par un excentrique autour de l'axe de l'autre de façon que, dans la zone d'engrènement du satellite, la denture unique de celui-ci coopère effectivement avec les deux dentures des roues planétaires. Une telle disposition accroît sensiblement la complexité de l'articulation et est aussi une cause d'usure accrue et de jeu.

Selon le troisième mode de réalisation décrit dans ce document, correspondant au préambule de la revendication 1, les deux roues planétaires sont montées sur un axe commun et comportent des dentures, orientées vers l'intérieur, de diamètres différents. Le satellite comporte deux dentures côte à côte de diamètres différents, orientées vers l'extérieur dont les dimensions sont telles que, sous l'action de l'excentrique, elles engrènent simultanément avec les dentures correspondantes des deux roues planétaires.

Ce dernier mode de réalisation de l'articulation continue pour siège présente des avantages de simplicité de conception par rapport aux précédents mais contrairement à ce qui est indiqué dans le brevet FR-A-1 590 551 il n'est pas irréversible dès que la différence de diamètre entre les deux dentures du satellite devient notable. On comprend en effet que le couple moteur éventuellement exercé par la roue planétaire mobile n'est plus équilibré par le couple résistant opposé par la roue planétaire fixe, les bras de levier par rapport à l'axe commun étant différents.

La réversibilité de ce dernier mode de réalisation est d'autant plus grande que le rapport entre les diamètres des deux dentures du satellite est plus élevé. Dans la pratique on peut avoir intérêt à accroître ce rapport de façon à permettre un réglage de l'inclinaison du dossier relativement rapide ne nécessitant pas de nombreux tours de l'excentrique. Dans la pratique également, il est souvent nécessaire, pour réduire l'effort à exercer sur le moyen de commande en rotation de l'excentrique de réduire les frottements entre les pièces de l'articulation. Ceci est réalisé par lubrification et aussi par utilisation de roulements à billes ou à rouleaux. Toutes ces mesures accroissent la réversibilité de l'articulation et ont pour conséquence le fait qu'une poussée, exercée sur le dossier du siège avec une force suffisante, entraîne en rotation le satellite avec rotation de l'excentrique autour de l'axe commun et déplacement angulaire de la roue planétaire mobile et du dossier. C'est un grave inconvénient, en particulier pour un siège de véhicule, car en cas de choc violent le dossier risque de se rabattre brusquement dans un sens ou dans l'autre. Ce déréglage qui peut aussi être progressif du fait de la force exercée sur le dossier par une personne assise ou/et des vibrations de la route est par lui-même une gêne et une cause d'accident.

On a recherché la possibilité de rendre irréversibles de telles articulations dans le cas ou le rapport de diamètre entre la grande et la petite denture du satellite est au moins égal à 1,05 et le plus souvent compris entre 1,05 et 2.

On a recherché aussi la possibilité d'obtenir une telle irréversibilité même dans le cas où l'articulation comporte des moyens permettant de réduire les frottements parasites tels que par exemple des roulements à billes ou à rouleaux pouvant être placés entre l'excentrique et le satellite ou entre le flasque mobile et une portée annulaire fixe ou encore formant portée de roulement pour l'arbre qui entraîne ce satellite.

On a recherché en particulier la possibilité de conserver une telle irréversibilité même pour des couples élevés, de l'ordre de 1000 mN exercés sur la roue planétaire mobile. De tels couples peuvent résulter par exemple de la poussée exercée sur le dossier d'un siège avant de véhicule par l'occupant d'un siège arrière en cas de ralentissement brutal.

On a recherché aussi la possibilité de conserver une telle irréversibilité sans avoir à effectuer des opérations particulières d'entretien.

On a enfin recherché la possibilité de réaliser une telle irréversibilité sans réduire la facilité de réglage et sans accroître de façon notable le couple qu'il faut exercer sur un moyen de réglage pour faire tourner l'excentrique et donc entraîner le satellite.

L'articulation continue irréversible qui fait l'objet de l'invention, permet de résoudre dans son ensemble le problème ainsi posé. Elle s'applique non seulement aux sièges de véhicules ou autres types de sièges mais peut aussi s'appliquer à tout dispositif comportant une partie fixe et une partie mobile par rapport à la partie fixe, autour d'un axe commun.

Cette articulation comporte une roue planétaire comportant des moyens de liaison qui la rendent solidaire de la partie fixe du dispositif et qui est dénommée flasque fixe dans la suite de la description et dans les revendications. Elle comporte également une roue planétaire comportant des moyens de liaison qui la rendent solidaire de la partie mobile du dispositif et qui est dénommée flasque mobile dans la suite de la description et dans les revendications. Ce flasque fixe et ce flasque mobile sont montés suivant un axe commun, un moyen de réglage permettant de faire tourner un excentrique autour de cet axe commun de façon à entraîner un satellite placé entre les deux flasques et muni de deux dentures, de diamètres différents, disposées dans deux plans parallèles, dentures qui coopèrent chacune avec la denture qui lui correspond, solidaire du flasque fixe ou du flasque mobile. Suivant l'invention, ladite articulation est caractérisée en ce que un disque de blocage, centré sur l'axe commun et calé en rotation par rapport à l'excentrique, grâce à des moyens de liaison, est disposé d'un côté au moins du satellite dans l'intervalle compris entre la paroi latérale de celui-ci et la paroi en regard du flasque correspondant et en ce que le satellite est monté autour de l'excentrique avec jeu pour qu'un couple, exercé sur le flasque mobile par rapport à l'axe commun, permette à la paroi latérale du satellite en regard de celle du disque de blocage de basculer de son plan initial d'une quantité suffisante pour venir localement en appui contre cette paroi en regard de ce disque, la pression exercée localement contre la paroi de ce disque de blocage par la paroi latérale du satellite mettant la paroi de l'autre face de ce disque de blocage, dans la zone correspondante, en appui contre la paroi en regard du flasque correspondant, provoquant ainsi le blocage du disque donc de l'excentrique par rapport au flasque correspondant et donc également le blocage du flasque mobile par rapport au flasque fixe.

De préférence la distance qui sépare entre eux les deux plans perpendiculaires à l'axe du satellite qui coupent chacun une des deux dentures de celui-ci en deux parties égales, est au moins égale à 1/35 du diamètre moyen de ces deux dentures.

De façon avantageuse, un disque de blocage est disposé de chaque côté du satellite dans chacun des deux intervalles compris entre chacune des deux parois latérales de ce satellite et les parois latérales en regard correspondants du flasque fixe et du flasque mobile.

De façon avantageuse également, l'une au moins des deux surfaces latérales, aptes à venir en appui l'une contre l'autre, du satellite et d'au moins un disque de blocage est traitée de façon à accroître son coefficient de frottement.

De façon particulièrement avantageuse, le traitement permettant d'accroître le coefficient de frottement de l'une ou l'autre des surfaces du satellite et d'au moins un disque de blocage qui viennent en appui l'une contre l'autre, consiste à accroître la rugosité de ces surfaces ou encore à projeter sur celles-ci une matière rugueuse ou à coefficient de frottement élevé.

De façon générale l'articulation suivant l'invention concerne tous les cas où le satellite comporte deux dentures dont le rapport des diamètres est au moins égal à 1,05. Ce rapport de diamètre peut atteindre, et même dépasser 2 tout en permettant encore l'irréversibilité grâce au moyen de blocage suivant l'invention.

Bien que cette invention s'applique plus facilement aux satellites comportant deux dentures orientées vers l'extérieur, on peut aussi envisager de l'appliquer aux articulations comportant un satellite muni à la fois d'une denture orientée vers l'extérieur et d'une autre denture orientée vers l'intérieur. Les dentures d'un tel satellite coopèrent avec les dentures de deux flasques orientées de façon complémentaires. Il est cependant nécessaire que l'écartement des deux plans parallèles perpendiculaires à l'axe du satellite qui coupent chacune des deux dentures en deux parties égales, soit suffisant pour permettre à l'effet de couple de provoquer le basculement du satellite de sur son plan initial et sa mise en appui contre le disque de blocage.

Il est possible également d'appliquer l'articulation irréversible suivant l'invention à une articulation continue à rattrapage automatique des jeux telle que celle suivant la demande de brevet FR-A-2 607 761 (numéro d'enregistrement national 8616917), publiée après la date de priorité de la présente demande.

Dans une telle articulation l'excentrique est muni d'un coussinet élastique permettant ce rattrapage des jeux. Par ailleurs, le support en rotation de l'excentrique peut comporter deux zones d'appui privilégiées qui, en coopération avec le coussinet élastique, permettent de supprimer les battements de la partie mobile du dispositif, le dossier du siège dans le cas dudit FR-A-2 607 761, dûs à l'usure. L'adjonction à une telle articulation d'un disque de blocage suivant l'invention permet de combiner les avantages de l'irréversibilité et du rattrapage des jeux.

On peut enfin réduire les frottements et faciliter le réglage par l'utilisation de tous moyens connus et notamment de roulements à billes ou à rouleaux, par exemple entre excentrique et satellite ou entre flasque fixe et flasque mobile tout en conservant l'irréversibilité de l'articulation.

Les figures et les exemples ci-après décrivent, de façon non limitative, plusieurs modes de mise en oeuvre de l'invention dans le cas d'articulations de sièges de véhicules.

La figure 1 est une vue suivant la flèche F1 de la figure 2 d'un disque de blocage suivant l'invention et de son mode de liaison avec un excentrique logé à l'intérieur d'un satellite.

La figure 2 est une vue en coupe suivant un plan contenant l'axe commun d'une articulation suivant l'invention.

La figure 3 est une vue suivant la flèche F2 de la Figure 2 d'un excentrique comportant des moyens de rattrapage automatique des jeux logé comme dans le cas de la Figure 1 à l'intérieur d'un satellite et solidarisé par des moyens de liaison avec un disque de blocage.

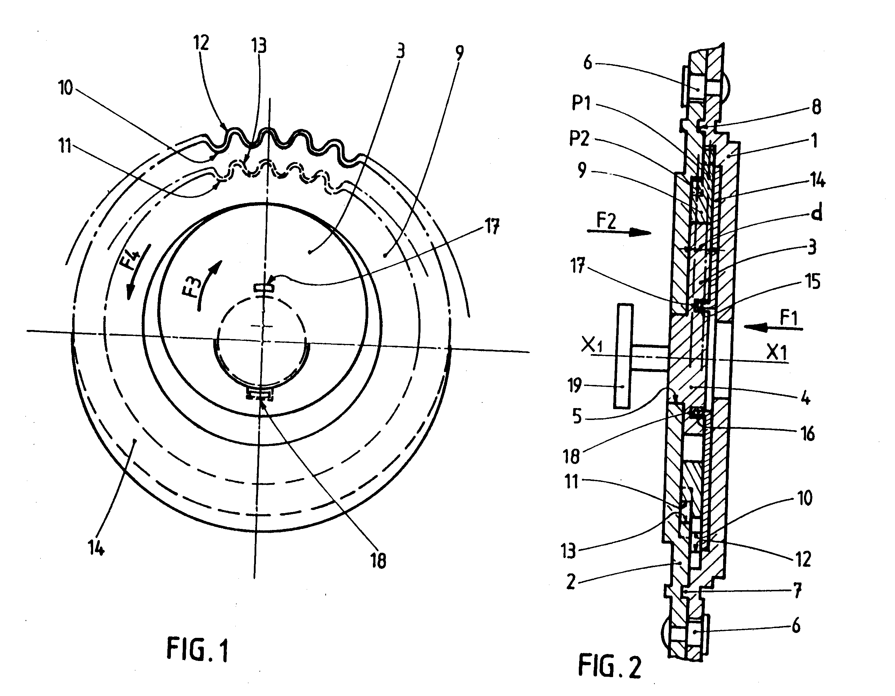

On voit Fig 1 et 2 un premier mode de réalisation du dispositif suivant l'invention représenté de façon schématique.

Ce dispositif comporte, de façon connue une articulation pour siège de véhicule comportant un flasque fixe 1 relié de façon connue et non représentée à l'assise du siège et un flasque mobile 2 relié de façon également non représentée au dossier du siège. Ces deux flasques sont articulés autour d'un axe commun X1 - X1. Un excentrique formant came 3 est monté en rotation autour du même axe par un arbre 4 qui repose sur une portée de révolution 5 ménagée dans le flasque mobile 2. Des guides ou pions tels que 6 assurent le maintien des deux flasques l'un contre l'autre et une couronne circulaire 7 pénétrant dans un évidement circulaire 8 assure le centrage des deux flasques. Le satellite 9 est muni de deux dentures orientées vers l'extérieur 10, 11 dont le rapport entre les diamètres moyens est d'environ 1,25.

Ce satellite 9 est entraîné par l'excentrique formant came 3 de façon que ses dentures 10, 11 coopèrent avec les dentures orientées vers l'intérieur 12 et 13 des flasques fixe 1 et mobile 2. Un disque de blocage 14 est centré sur l'axe commun.

Le disque de blocage 14 est calé en rotation par rapport à l'excentrique 3 grâce à des moyens de liaison constitués par des tétons 15, 16, qui pénètrent dans des logements 17, 18, ménagés dans l'excentrique 3.

Le diamètre de ce disque de blocage 14 est tel qu'il recouvre la majeure partie de la surface latérale du satellite 9 qui est en regard de la surface latérale correspondante de ce disque.

La surface latérale opposée du même disque est en regard de la surface latérale correspondante du flasque fixe 1.

Comme le montre la figure 2, l'intervalle ménagé entre le satellite 9 et le flasque fixe 1 est juste suffisant pour loger le disque de blocage 14 avec le jeu nécessaire pour permettre le réglage de l'articulation au moyen du bouton de réglage 19 sans frottement excessif.

A la figure 1, on a enlevé la moitié supérieure du disque de blocage 14 pour faire apparaître les zones d'engrènement des dentures 10, 11 du satellite 9 avec les dentures 12, 13 indiquées de façon purement schématique des deux flasques sous l'action de l'excentrique en forme de came 3.

On constate que la rotation de l'excentrique 3 dans le sens de la flèche F3 entraîne le satellite 9 d'un mouvement épicycloïdal avec rotation de ce satellite en sens inverse suivant la flèche F4. On comprend donc que lorsque le satellite 9, sous l'action d'un couple exercé sur le flasque mobile 2 par rapport à l'axe X1 - X1, bascule de son plan, sa paroi latérale vient localement en appui contre la paroi latérale du disque de blocage 14, mettant ainsi la paroi du disque 14 en appui contre la paroi intérieure du flasque fixe 1.

Le fait que les parois latérales en appui l'une contre l'autre du satellite et du disque de blocage soient sollicitées en rotation en sens inverse par le couple ainsi exercé, permet un blocage efficace, l'efficacité de ce blocage étant d'autant plus grande que la pression exercée par le satellite 9 sur le disque de blocage 14 et par le disque 14 sur le flasque fixe 1 est plus forte dans la zone d'appui. Ceci assure donc le maintien de la position angulaire du dossier du siège par rapport à l'assise.

On comprend que l'effet de blocage est d'autant plus grand que le diamètre du disque de blocage 14 dans son logement et face au satellite 9 est plus grand.

Cette pression dépend du couple exercé sur le flasque mobile 2 et de la distance "d" entre les deux plans P1 et P2, perpendiculaires à l'axe commun X1 - X1, qui coupent chacun une des deux dentures 10, 11, du satellite en deux parties égales. Cette distance "d" est au moins égale à 1/35 du diamètre moyen de ces deux dentures. L'expérience montre que lorsque cette distance "d" est au moins égale à 1/35 on n'observe pas de déplacement angulaire relatif mesurable entre flasque mobile et flasque fixe pour un couple quelconque exercé sur le flasque mobile, par rapport à l'axe X1 - X1, dans le domaine compris entre 100 et 1000 mN.

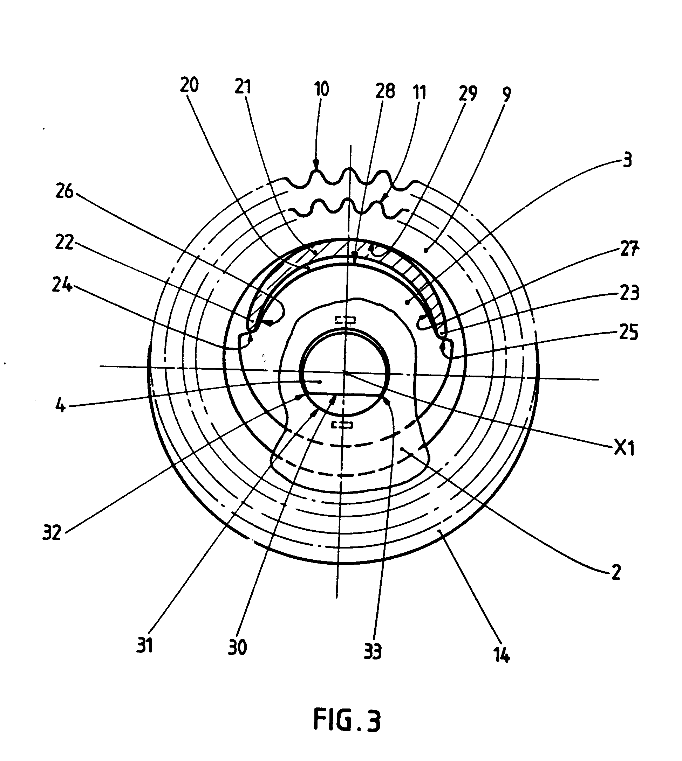

La figure 3 est une vue, suivant la flèche F2 de la figure 2, d'un mode particulier de réalisation du dispositif suivant l'invention dans lequel un moyen de rattrapage automatique des jeux est incorporé à ce dispositif, ce moyen de rattrapage automatique faisant en lui-même l'objet de ladite demande de brevet FR-A-2 607 761.

Comme le montre la figure 3 les dispositions relatives de l'excentrique formant came 3, du satellite 9 et du disque de blocage 14 sont les mêmes et la liaison entre le disque de blocage et l'excentrique par tétons et logements est inchangée. Afin de simplifier la figure, le flasque fixe 1 n'est pas représenté. Comme le montre la figure 3 la zone supérieure de l'excentrique formant came présente un évidement 20 occupé par un coussinet métallique élastique 21 dont les extrémités amincies 22, 23, sont limitées en déplacement par les parties en redent 24, 25, de l'excentrique et prennent apppui sur les zones 26, 27 de cet excentrique. Par ailleurs le coussinet ne s'applique pas sur la zone supérieure 28 de l'excentrique et exerce une pression élastique contre la paroi 29 de l'alésage du satellite formant portée de révolution. De plus l'arbre 4 de l'excentrique 3 présente un méplat 30 de façon à porter sur la paroi 31 de l'alésage du flasque mobile 2 dont seule la zone voisine de l'axe est représentée, en deux zones d'appui privilégiées 32, 33, disposées, dans le cas de la fig. 3, à environ 120° l'une de l'autre par rapport à l'axe commun X1. Cet angle peut être choisi de préférence entre 90 et 150°. Une telle structure particulière assure la stabilité de l'articulation et le rattrapage de l'usure. Il en résulte un fonctionnement silencieux et la suppression des risques de battement de dossier après un certain temps d'utilisation.

Comme cela a été dit plus haut on peut réduire les frottements des différentes pièces de l'articulation par tout moyen connu et notamment par l'utilisation de roulements à billes ou à rouleaux. De tels roulements peuvent en particulier être insérés entre l'excentrique en forme de came et le satellite ou entre le flasque mobile et le flasque fixe ou toute autre paroi fixe contre laquelle il prend appui. Grâce au disque de blocage il est possible de conserver cependant l'irréversibilité.

De façon plus générale, l'articulation continue irréversible suivant l'invention peut s'appliquer à tout dispositif comportant deux parties: l'une fixe, l'autre mobile par rapport à la première autour d'un axe commun, l'inclinaison de la partie mobile par rapport à la partie fixe devant pouvoir être ajustée de façon continue et irréversible.

On peut ainsi appliquer l'articulation suivant l'invention à certains types de lits à dossiers ajustables, ou à tous autres dispositifs.

## Revendications

1. Articulation continue irréversible pour dispositif comportant une partie fixe et une partie mobile par rapport à la partie fixe, autour d'un axe commun (X1), cette articulation comportant un flasque fixe (1) solidaire de la partie fixe et un flasque mobile (2) solidaire de la partie mobile, montés suivant l'axe commun ($X_1$), un moyen de réglage (19) permettant de faire tourner un excentrique (3) autour de cet axe commun ($X_1$) de façon à entraîner un satellite (9) placé entre les deux flasques (1,2) et muni de deux dentures (10, 11), de diamètres différents disposées dans deux plans parallèles qui coopèrent chacune avec la denture (12, 13) qui lui correspond solidaire du flasque fixe (1) ou du flasque mobile (2), caractérisée en ce qu'un disque de blocage (14), centré sur l'axe commun (X1) et calé en rotation par rapport à l'excentrique (3), grâce à des moyens de liaison (15, 16, 17, 18), est disposé d'un côté au moins du satellite (9) dans l'intervalle compris entre la paroi latérale de celui-ci (9) et la paroi latérale en regard du flasque (1,2) correspondant et en ce que le satellite (9) est monté autour de l'excentrique (3) avec jeu pour qu'un couple, exercé sur le flasque mobile (2) par rapport à l'axe commun ($X_1$), permette à la paroi latérale du satellite (9) en regard de celle du disque de blocage (14) de basculer de son plan initial d'une quantité suffisante pour venir localement en appui contre cette paroi en regard de ce disque (14), la pression exercée localement contre la paroi de ce disque de blocage (14) par la paroi du satellite (9) mettant la paroi de l'autre face de ce disque de blocage (14), dans la zone correspondante, en appui contre la paroi en regard du flasque (1,2) correspondant, provoquant ainsi le blocage du satellite (9) par rapport au disque (14), donc de l'excentrique (3) par rapport au flasque (1,2) correspondant et donc également le blocage du flasque mobile (2) par rapport au flasque fixe (1).

2. Articulation suivant revendication 1 caractérisée en ce que le disque de blocage (14) est disposé de façon que lorsque la paroi du satellite (9) vient en appui contre sa paroi latérale en regard de celle-ci, sous l'action du couple exercé sur le flasque mobile (2), la paroi latérale de ce disque de blocage (14) située sur l'autre face de celui-ci vienne en appui contre la paroi latérale en regard du flasque (1,2) correspondant.

3. Articulation suivant revendication 1 ou 2 caractérisée en ce que la distance (d) qui sépare entre eux les deux plans (P1, P2) perpendiculaires à l'axe du satellite qui coupent chacun une des deux dentures (10, 11) de celui-ci en deux parties égales est au moins égale à 1/35 du diamètre moyen de ces deux dentures.

4. Articulation suivant l'une des revendications 1 à 3 caractérisée en ce que un disque de blocage (14) est disposé de chaque côté du satellite (9).

5. Articulation suivant l'une des revendications 1 à 4 caractérisée en ce que l'une au moins des deux surfaces latérales, aptes à venir en appui l'une contre l'autre, du satellite (9) et d'au moins un disque de blocage (14) est traitée de façon à accroître son coefficient de frottement.

6. Articulation suivant l'une des revendications 1 à 5 caractérisée en ce que son excentrique (3) comporte un coussinet élastique (21) qui exerce une pression élastique contre la paroi (29) de l'alésage du satellite (9).

7. Articulation suivant revendication 6 caractérisée en ce que le support en rotation de l'excentrique (3) comporte deux zone d'appui privilégiées (32, 33) situées à une distance angulaire d'environ 90 à 150° l'une de l'autre.

8. Articulation suivant l'une des revendications 1 à 7 caractérisée en ce qu'elle comporte au moins un roulement à billes ou à rouleaux disposé entre l'excentrique (3) et le satellite (9) ou entre le flasque mobile et une paroi fixe sur laquelle il est en appui.

9. Articulation suivant l'une des revendications 1 à 8 caractérisée en ce que le rapport entre les diamètres moyens des deux dentures (10, 11) du satellite (9) est au moins égal à 1,05.

10. Articulation suivant revendication 9 caractérisée en ce que le rapport entre les diamètres moyens des deux dentures du satellite n'est pas notablement supérieure à 2.

11. Application de l'articulation continue irréversible suivant l'une des revendications 1 à 10 à un siège comportant une assise fixe et un dossier, mobile par rapport à l'assise autour d'un axe commun, de façon à régler l'inclinaison de ce dossier.

12. Application de l'articulation continue irréversible suivant l'une des revendications 1 à 10 à un lit comportant un dossier mobile par rapport à une partie fixe autour d'un axe commun.

## Patentansprüche

1. Stufenlose, nicht umkehrbare Gelenkverbindung für eine Vorrichtung mit einem festen Teil und mit einem relativ zu dem festen Teil bewegbaren Teil, um eine gemeinsame Achse (X1), wobei diese Gelenkverbindung einen festen Flansch (1), einstückig mit dem festen Teil, und einen bewegbaren Flansch (2), einstückig mit dem bewegbaren Teil, angebracht auf der gemeinsamen Achse (X1), umfaßt, wobei eine Einstelleinrichtung (19) es erlaubt, einen Exzenter (3) um die gemeinsame Achse (X1) derart zu drehen, daß ein Planetenrad (9) angetrieben wird, das zwischen den beiden Flanschen (1, 2) angeordnet und mit zwei Zahnungen (10, 11) versehen ist, mit unterschiedlichen Durchmessern, angeordnet in zwei parallelen Ebenen, die jede mit der ihr entsprechenden Zahnung (12, 13), einstückig mit dem festen Flansch (1) oder dem bewegbaren Flansch (2), zusammenwirken, dadurch gekennzeichnet, daß eine Blockierscheibe (14), auf der gemeinsamen Achse (X1) zentriert und drehfest in bezug auf den Exzenter (3), mittels Verbindungseinrichtungen (15, 16, 17, 18), auf einer Seite wenigstens des Planetenrades (9) in dem Zwischenraum zwischen dessen (9) Seitenwand und der Seitenwand gegenüber dem entsprechenden Flansch (1, 2) angeordnet ist und daß das Planetenrad (9) mit Spiel um den Exzenter (3) angebracht ist, damit ein auf den bewegbaren Flansch (2) in bezug auf die gemeinsame Achse (X1) ausgeübtes Moment es der Seitenwand des Planetenrades (9) gegenüber derjenigen der Blockierscheibe (14) erlaubt, aus seiner Anfangsebene um einen ausreichenden Betrag zu kippen, um lokal in Anschlag gegen diese Wand gegenüber dieser Scheibe (14) zu kommen, wobei der lokal durch die Wand des Planetenrades (9) gegen die Wand dieser Blockierscheibe (14) ausgeübte Druck die Wand der anderen Fläche dieser Blockierscheibe (14) in dem entsprechenden Bereich in Anschlag gegen die Wand gegenüber dem entsprechenden Flansch (1, 2) bringt, somit das Blockieren des Planetenrades (9) in bezug auf die Scheibe (14) hervorrufend, folglich des Exzenters (3) in bezug auf den entsprechenden Flansch (1, 2) und folglich gleichermaßen das Blockieren des bewegbaren Flansches (2) in bezug auf den festen Flansch (1).

2. Gelenkverbindung nach Anspruch 1, dadurch gekennzeichnet, daß die Blockierscheibe (14) derart angeordnet ist, daß, wenn die Wand des Planetenrades (9) in Anschlag gegen seine Seitenwand gegenüber dieser kommt, unter Wirkung des auf den bewegbaren Flansch (2) ausgeübten Momentes, die Seitenwand dieser Blockierscheibe (14), auf der anderen Seite derselben befindlich, in Anschlag gegen die Seitenwand gegenüber dem entsprechenden Flansch (1, 2) kommt.

3. Gelenkverbindung nach Anspruch 1 oder 2, dadurch gekennzeichnet, daß der Abstand (d), der die beiden Ebenen (P1, P2) senkrecht zur Achse des Planetenrades (9) voneinander trennt, die jede eine der zwei Zahnungen (10, 11) desselben in zwei gleiche Teile schneiden, wenigstens gleich 1/35 des mittleren Durchmessers dieser beiden Zahnungen ist.

4. Gelenkverbindung nach einem der Ansprüche 1 bis 3, dadurch gekennzeichnet, daß auf jeder Seite des Planetenrades (9) eine Blockierscheibe (14) angeordnet ist.

5. Gelenkverbindung nach einem der Ansprüche 1 bis 4, dadurch gekennzeichnet, daß die eine zumindest der zwei Seitenflächen, geeignet zum gegenseitigen In-Anschlag-Kommen, des Planetenrades (9) und der wenigstens einen Blockierscheibe (14) so behandelt ist, daß ihr Reibungskoeffizient vergrößert ist.

6. Gelenkverbindung nach einem der Ansprüche 1 bis 5, dadurch gekennzeichnet, daß ihr Exzenter (3) ein elastisches Lager (21) aufweist, das einen elastischen Druck gegen die Wand (29) der Bohrung des Planetenrades (9) ausübt.

7. Gelenkverbindung nach Anspruch 6, dadurch gekennzeichnet, daß der Drehträger des Exzenters (3) zwei vorrangige Anschlagbereiche (32, 33) umfaßt, die in einem Winkelabstand von ungefähr 90 bis 150° voneinander angeordnet sind.

8. Gelenkverbindung nach einem der Ansprüche 1 bis 7, dadurch gekennzeichnet, daß sie weningstens eine Kugel- oder Rollenlager umfaßt, das zwischen dem Exzenter (3) und dem Planetenrad (9) oder zwischen dem bewegbaren Flansch und einer festen Wand, an der er anliegt, angeordnet ist.

9. Gelenkverbindung nach einem der Anprüche 1 bis 8, dadurch gekennzeichnet, daß das Verhältnis der mittleren Durchmesser der zwei Zahnungen (10, 11) des Planetenrades (9) wenigstens gleich 1,05 ist.

10. Gelenkverbindung nach Anspruch 9, dadurch gekennzeichnet, daß das Verhältnis der mittleren Durchmesser der zwei Zahnungen des Planetenrades nicht wesentlich oberhalb 2 liegt.

11. Verwendung der stufenlosen, nicht umkehrbaren Gelenkverbindung nach einem der Ansprüche 1 bis 10 bei einem Sitz mit einer festen Sitzfläche und einer Sitzlehne, bewegbar in bezug auf die Sitzfläche um eine gemeinsame Achse, um die Neigung dieser Sitzfläche einzustellen.

12. Verwendung der stufenlosen, nicht umkehrbaren Gelenkverbindung nach einem der Ansprüche 1 bis 10 bei einem Bett mit einer in bezug auf ein festes Teil um eine gemeinsame Achse bewegbaren Lehne.

## Claims

1. Irreversible, continuous joint for a device comprising a fixed part and a part which can be moved relative to the fixed part, around a common axis (X1), this joint comprising a fixed wheel-disc (1) solidly connected to the fixed part and a movable wheel-disc (2) solidly connected to the movable part, which wheel-discs are mounted along the common axis (X1), an adjustment means (19) enabling an eccentric (3) to be rotated around this common axis (X1) so as to drive a planet gear (9) positioned between the two wheel-discs (1, 2) and provided with two toothings (10, 11) of different diameters which are arranged in two parallel planes and each cooperate with the toothing (12, 13) which corresponds to it and is solidly connected to the fixed wheel-disc (1) or the movable wheel-disc (2), characterised in that a locking disc (14) centred on the common axis (X1) and immobilized for rotation relative to the eccentric (3), due to connection means (15, 16, 17, 18), is arranged on at least one side of the planet gear (9) in the gap between the side wall of this planet gear (9) and the opposite side wall of the corresponding wheel-disc (1, 2), and in that the planet gear (9) is mounted around the eccentric (3) with play so that moment exerted on the wheel-disc (2), which is movable relative to the common axis (X1), enables the side wall (9) opposite that of the locking disc (14) to rock from its initial plane by an amount sufficient for it to come to bear locally against this opposite wall of this disc (14), with the pressure exerted locally against the wall of this locking disc (14) by the wall of the planet gear (9) bringing the wall of the other face of this locking disc (14), in the corresponding zone, to bear against the opposite wall of the corresponding wheel-disc (1, 2), thus causing the locking of the planet gear (9) relative to the disc (14), and thus the locking of the eccentric (3) relative to the corresponding wheel-disc (1, 2), and thus also the locking of the movable wheel-disc (2) relative to the fixed wheel-disc (1).

2. Joint according to claim 1, characterised in that the locking disc (14) is arranged so that, when the wall of the planet gear (9) comes to bear against its side wall opposite this wall, under the action of moment exerted on the movable wheel-disc (2), the side wall of this locking disc (14) located on the other face of this locking disc comes to bear against the opposite side wall of the corresponding wheel-disc (1, 2).

3. Joint according to claim 1 or 2, characterised in that the distance (d) separating the two planes (P1, P2), which are perpendicular to the axis of the planet gear and each cut one of the two toothings (10, 11) of this planet gear into two equal parts, is at least equal to 1/35 of the mean diameter of these two toothings.

4. Joint according to one of claims 1 to 3, characterised in that a locking disc (14) is arranged on either side of the planet gear (9).

5. Joint according to one of claims 1 to 4, characterised in that at least one of the two lateral surfaces of the planet gear (9), which are suitable for coming to bear against each other, and of at least one locking disc (14), is treated so that its coefficient of friction is increased.

6. Joint according to one of claims 1 to 5, chacterised in that its eccentric (3) comprises an elastic bearing (21) which exerts an elastic pressure against the wall (29) of the bore of the planet gear (9).

7. Joint according to claim 6, characterised in that the support for rotation of the eccentric (3) comprises two preferred zones of support (32, 33) located at an angular distance of approximately 90 to 150° from each other.

8. Joint according to one of claims 1 to 7, characterised in that it comprises at least one ball or roller bearing provided between the eccentric (3) and the planet gear (9) or between the movable wheel-disc and a fixed wall against which it bears.

9. Joint according to one of claims 1 to 8, characterised in that the ratio between the mean diameters of the two toothings (10, 11) of the planet gear (9) is at east equal to 1.05.

10. Joint according to claim 9, characterised in that the ratio between the mean diameters of the two toothings of the planet gear is not appreciably greater than 2.

11. Application of the irreversible continuous joint according to one of claims 1 to 10 to a seat comprising a fixed seat base and a seat back which can be moved around a common axis so as to adjust the inclination of this seat back.

12. Application of the irreversible continuous joint according to one of claims 1 to 10 to a bed comprising a back rest which can be moved relative to a fixed part, around a common axis.

FIG. 2

FIG. 1

FIG.3